# EUROPEAN PATENT APPLICATION

(11) **EP 1 686 734 A1**
(43) Date of publication of application: **02.08.2006**
(21) Application number: 05001568.4
(22) Date of filing: 26.01.2005
(51) Int. Cl.: H04L 12/56, H04Q 11/00

(54) **A method and apparatus for transmitting an optical signal in an optical burst switching network using arrival time**

(71) Applicant: SIEMENS AKTIENGESELLSCHAFT, 80333 München (DE)
(72) Inventor: De Vega Rodrigo, Miguel, 1200 Woluwe St. Lambert Brussels (BE)

(57) **Abstract**

Transmitting an optical signal in an optical burst switching network having a data burst signal (620,622) and a control signal (612,614) representing the optical signal. A header packet (612,614) of the control signal (612,614) is generated having information indicating an (612,614) arrival time of the data burst signal (620,622) and no information regarding a burst size of the data burst signal (620,622). The control signal (612,614), with the header packet (612,614) generated is transmitted through the optical burst switching network.

## Description

The amount of raw bandwidth available on fiber optic links has increased dramatically with advances in dense wavelength division multiplexing (DWDM). In order to efficiently utilize this bandwidth in a cost-effective manner for IP traffic, an appropriate all-optical transport method must be developed. This transport method must be able to handle asynchronous bursty traffic by quickly provisioning resources while also minimizing the use of optical buffering.

Optical burst switching (OBS) is one such method for transporting traffic directly over a bufferless optical core network. In an optical burst switched network, bursts of data consisting of multiple packets are switched through the network all-optically.

The idea underlying OBS technology is to decouple the data path from the control path. In particular, IP packets are aggregated into much larger bursts before transmission through the network. This allows amortization for the switching overhead across many packets. A control message (or header) is transmitted ahead of the burst in order to configure the switches along the burst's route. The data burst follows the header after some offset time without waiting for an acknowledgment for the connection establishment. An offset time allows for the header to be processed at each node while the burst is buffered electronically at the source. Thus, no fiber delay lines are necessary at the intermediate nodes to delay the burst while the header is being processed.

A key measure of performance in optical networks, particularly dynamic wavelength routed optical networks, is the blocking probability, or the probability that an incoming connection request will be denied. An appreciation of the problem of blocking in an OBS network will be appreciated from the article from M. Neuts, H. L. Vu and M. Zukerman, "Performance analysis of optical composite burst switching", *IEEE Communications Letters, Vol. XX, NO. Y, Month 2002.*

Another concern in optical burst switched networks is contention, which occurs when multiple bursts contend for the same link. Contention in an optical burst switched network is particularly aggravated by the variable burst sizes and the long burst durations. Furthermore, since bursts are switched in a cut-through mode rather than a store-and-forward mode, optical burst-switched networks generally have limited buffering capabilities. A better appreciation of the problems of contention will be attained from the article from V. M. Vokkarane and J. P. Jue, "Burst segmentation: an approach for reducing packet loss in optical burst-switched networks", *IEEE ICC '02, April 2002*.

There have been several proposed reservation protocols in OBS networks, such as Horizon, JIT (Just-In-Time) and JET (Just-Enough-Time) that are supposed to reduce the blocking probability and address the problem of contention. Until now, JET has been the most favored since it seems to provide the best performance, in terms of blocking probability, of the three protocols. However, as we shall see, even the JET protocol could be improved. For completeness, the various protocols shall be described and analyzed in turn.

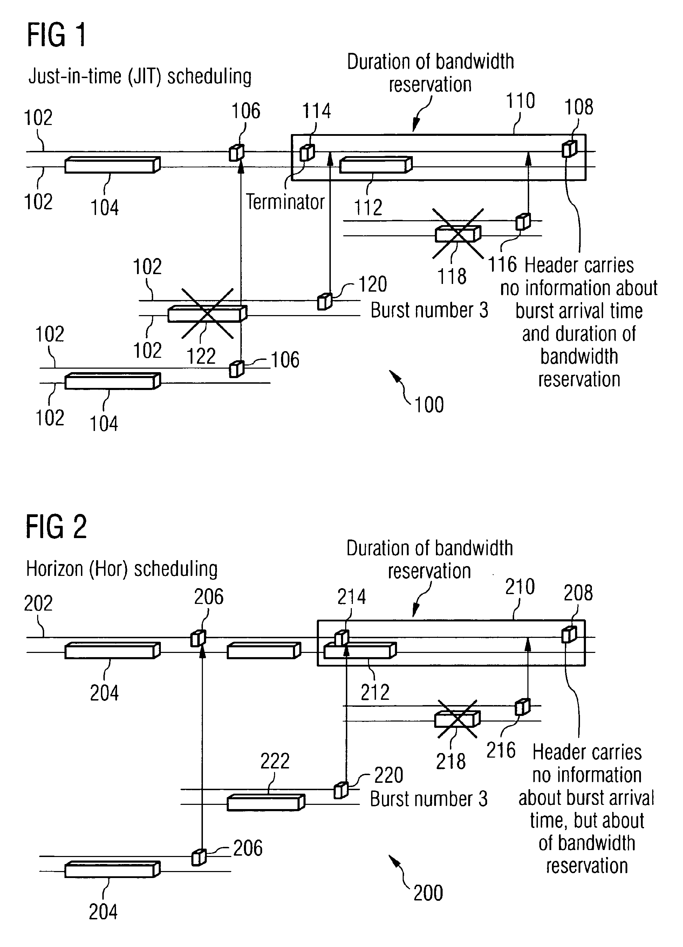

The Just-in-time (JIT) Reservation Protocol 100 will be described with reference to Figure 1. There is shown in the figure, various data paths 102, or channels, upon which the data bursts 104 and header information 106 are transmitted. In JIT, as the name implies, just as each header arrives, a bandwidth is immediately allocated. This is shown in the figure, wherein a header 108 arrives at a node (not shown) and the node immediately allocates the bandwidth 110 for a data burst 112. A terminating block 114, known as an *inband terminator (IBT)* packet, signals the end of the bandwidth to the node. The wavelength channel remains allocated until burst transmission has finished.

In the case of contention, it is shown in the figure that a request from another header, for example a second burst header 116 corresponding to a second burst 118, is received by the same node. However, the second burst header comes after the first burst header 108. In this case, the node is already allocated to the first burst 112 and, as a result, is rejected by the node. In this case, the second burst is discarded. In addition, a third burst header 120 is shown sent to the node after the first burst but before the end of the first burst bandwidth. In this case as well, the corresponding third burst 122 is rejected.

While JIT is considered to be advantageous for it's light weight approach, namely the low complexity required from both edge and core nodes, the disadvantages of this system are apparent from the above example. In the JIT case, it is apparent that there is no contention resolution. Thus, any second burst 118, is blocked regardless of the importance of the second block. In addition, the JIT system takes up more bandwidth than is necessary to transmit the burst. This is shown in the figure, where the first burst is completed, yet the bandwidth continues to be reserved. It shall be noted that, even though the third burst actually comes after the first bandwidth, the third burst is still blocked. In other words, losses occur even in cases where there is no transmission conflict between different bursts.

The reason for these deficiencies is that the only information that has to be kept record of in the network nodes in the JIT protocol is whether a wavelength channel is currently available or not. Thus, JIT is a completely "dumb" protocol that cannot correct for the problem of blocking bursts that are not actually in conflict. Nor has JIT any means of providing for contention cases.

An improvement to schemes like JIT can be achieved by using a *reserve limited duration (RLD) scheme such as that used by* the Horizon Reservation Protocol 200 that is discussed here with reference to Figure 2. Protocols based on RLD require the sender to signal the burst length in the control packet. A wavelength channel 202 that transmits bursts 204 and corresponding headers 206 is only allocated for a limited duration. Thus, subsequent burst transmission requests with a start time greater then the finishing time of an allocated burst may be accepted.

This is seen here where a first header 208 is received by a node (not shown) and the node, in response, reserves the bandwidth 210 for the first data burst 212. As in the normal case, when the node receives a header 216 corresponding to a second data burst 218, the node rejects that burst. In contrast to the JIT case, the end is known with RLD and hence a new header 220 of a third data burst 222 can be accepted. In other words, the basic offset interval of a burst may overlap the transmission phase of a previously accepted burst. In the JIT case, the burst number 3 is lost because at the instant when the control packet arrives, the end of the previous (accepted) burst is unknown.

However, despite the advantage that Horizon reduces the blocking probability of bursts in comparison to JIT, Horizon Control packets are larger than in JIT and the system grows exponentially in complexity.

Higher efficiency can be achieved if start times of burst transmissions are also considered for reservation. In other words, reservation does not begin immediately when a request arrives but is delayed by the basic offset. This approach is called *reserve fixed duration (RFD)*, as the channel is allocated for a fixed duration corresponding to the burst transmission time.

One proposal of an RFD-based reservation protocol is JET. State information in JET comprises both, the starting and finishing times of all accepted bursts. However, this makes the system rather complex. On the other hand in contrast to Horizon, JET is able to detect situations where no transmission conflict occurs although the start time of a new burst is earlier than the finishing time of the already accepted burst.

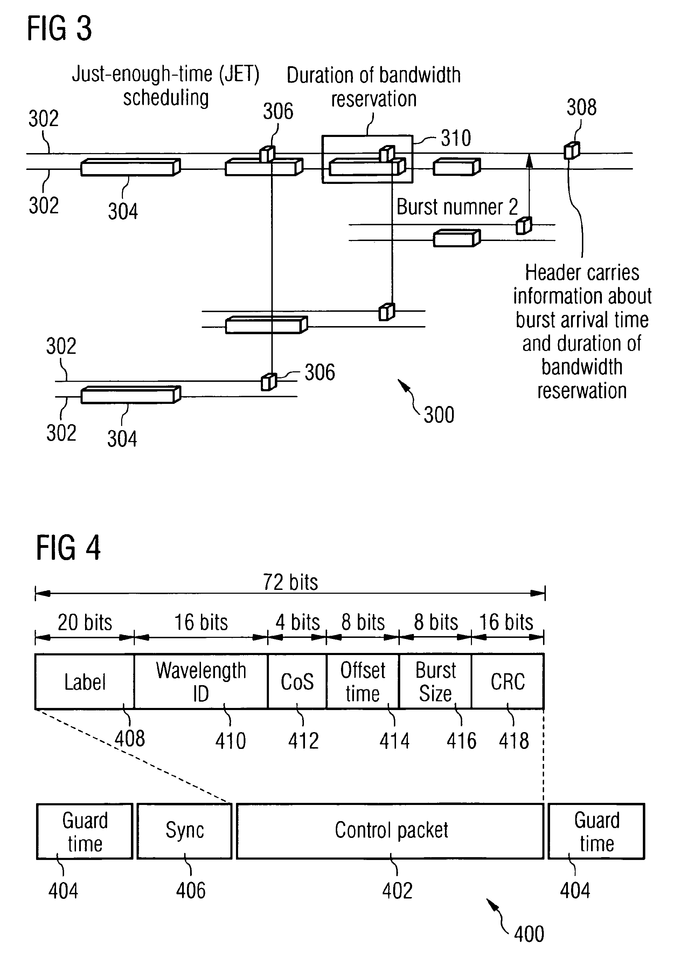

In the JET scheme 300 shown in Figure 3, channels 302 transmit bursts 304 that have corresponding headers 306. In this case, however, the bandwidth is independent from its header, so the burst can begin at any time. According to Figure 3, when the control packet 308 arrives at a core cross-connect (or switch), capacity is reserved in the cross-connect for the burst 310 with the delay of offset time. If capacity can be reserved, the arriving burst is then switched transparently through the cross-connect.

However, if the requested bandwidth is not available for the time indicated in the header, the burst is blocked and dropped. In addition, and although JET reduces the blocking probability of bursts in comparison to Horizon (and JIT), control packets are bigger than in Horizon (and JIT) and the system grows in complexity.

Despite its complexity, however, JET has been generally accepted as the most promising reservation protocol in OBS networks, since it leads to the lowest blocking probability of the three protocols. This is indicative of the importance that the industry places on reducing the blocking probability in OBS networks. However, even with JET this blocking probability is unacceptably high.

The problem remaining to be solved, and the challenge therein, is to define a new reservation protocol which performs even better than JET and that at the same time is simpler and easier to implement. In accomplishing this goal, the present invention takes into account at least three metrics to measure the reduced blocking probability.

First, the present invention takes into account the traffic characteristics of the proposed solution in order to choose an aggregation strategy that generates traffic with special statistical properties that reduce the blocking probability. Next, the invention strives to achieve a satisfactory degree of deflection routing, that is to re-route a blocked burst through another port of an optical switch whenever the destination port is busy. In addition, the invention aims to optimize burst segmentation, that is, to lose only the IP packets of which transmission was overlapped with the transmission of another burst and to save the rest of the IP packets of the blocked burst.

### Summary & Objects Of The Invention

The invention is the proposal of a new reservation protocol, herein referred to as JAT (Just the Arrival Time), which is simpler than the best protocol of the state-of-the-art (JET) and that, at the same time, performs better in terms of blocking probability.

In accordance with the objectives of the present invention, there is provided a method for transmitting an optical signal in an optical burst switching network having a data burst signal and a control signal representing the optical signal. A header packet of the control is generated signal having information indicating an arrival time of the data burst signal and no information regarding a burst size of the data burst signal and the control signal with the header packet generated is transmitted through the optical burst switching network.

The invention can be used in order to build more efficient and yet cheaper and less complex OBS networks. In particular, the new concept changes OBS nodes' hardware and software, OBS' control plane and OBS' header packet format.

### Brief Description Of The Drawings

The figures illustrate at least one example of the invention wherein reference numerals designate like elements.
Fig. 1 illustrates a prior art protocol,
Fig. 2 illustrates a prior art protocol,
Fig. 3 illustrates a prior art protocol,
Fig. 4 illustrates a control packet structure of the prior art protocol in Fig. 3,
Fig. 5a illustrates a control packet structure of the present invention,
Fig. 5b is a table illustrating the differences between the present invention an prior protocols,
Fig. 6a is an exemplary apparatus of the present invention, and
Fig. 6b illustrates an operation of the present invention.

### Detailed Description Of The Preferred Embodiments

The present invention proposes a new protocol for transmitting an optical signal according to an optical burst switching scheme that aims to be efficient at transmitting optical signals, yet has a lower blocking probability than JET. In addition, a protocol is provided that implements an improved contention policy than heretofore provided. To that end, there is proposed a "Just the Arrival Time" protocol.

A better appreciation of the new JAT protocol can be seen by observing the control packet structure 400 in JET Figure 4. The known structure includes a control packet that is headed by guard time blocks 404 and a sync block 406. The control packet itself 402 is comprised of a label 408, a wavelength ID 410, a class of service (CoS) field 412, an Offset time 414, a burst size field 416 and a cyclic redundancy code (CRC) field 418.

In particular, it shall be noticed that the burst size field 416, that is shown here as an 8 bit field, is present in the JET protocol. JET uses the burst size field to carry information regarding the burst size.

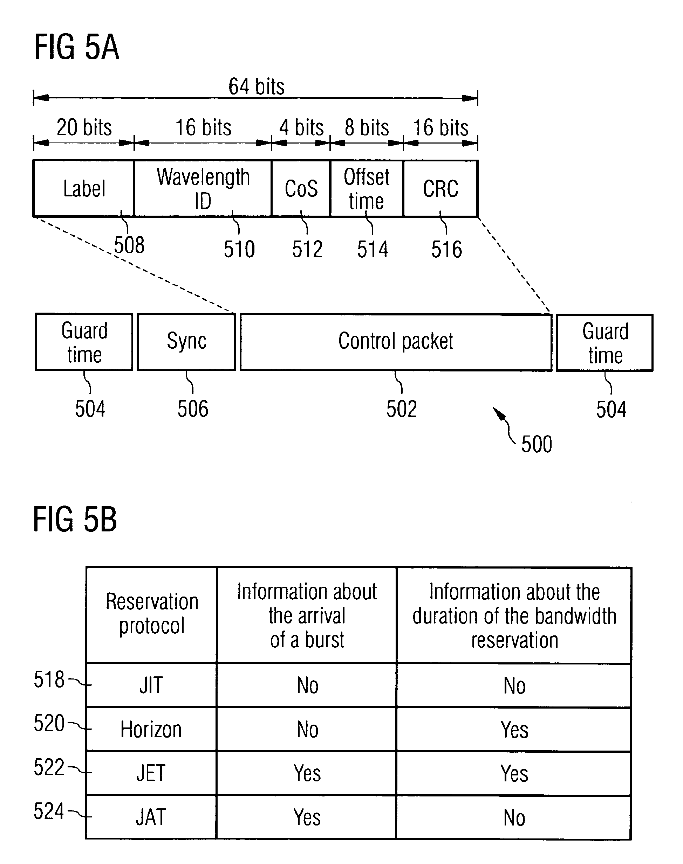

On the other hand, Figure 5a provides a counter solution to the JET header packet format. For the new JAT reservation protocol, there shall be no burst size information. Specifically, Figure 5a illustrates the control packet structure 500 in the newly-proposed JAT protocol.

As in JET, JAT comprises a control packet 502 bounded by guard blocks 504 and a sync block 506. The *guard time* serves as a way of safely separating consecutive bursts. The *sync* field allows the receptor to synchronize the reception of the bits belonging to the burst.

To continue, the label field 508 identifies the destination edge node. The *wavelength ID* field 510 contains the number of the wavelength on which the burst will be sent. The *CoS* 512 field stands for class of service and it may contain future QoS relevant information. The *offset time* field 514 contains the value of the offset time between header packet and burst. The *CRC* 516 field contains a cyclic redundancy code in order for other nodes to detect header packet transmission errors.

As the name indicates, JAT sends just the arrival time. In contradistinction to JET, the JAT header packets have information regarding the arrival time of the burst, but not the burst size. In fact, as Figure 5b illustrates, none of the other reservation protocols, JIT 518, Horizon 520 or JET 522 have this unique configuration. That is, only JAT 524 sends the arrival information of the burst but not the duration of the bandwidth reservation, i.e., the burst size.

It will be appreciated that the JAT configuration leads to a simpler control plane than with JET since less information has to be processed and less state variables have to be manipulated. Indeed, only the burst arrival time is important.

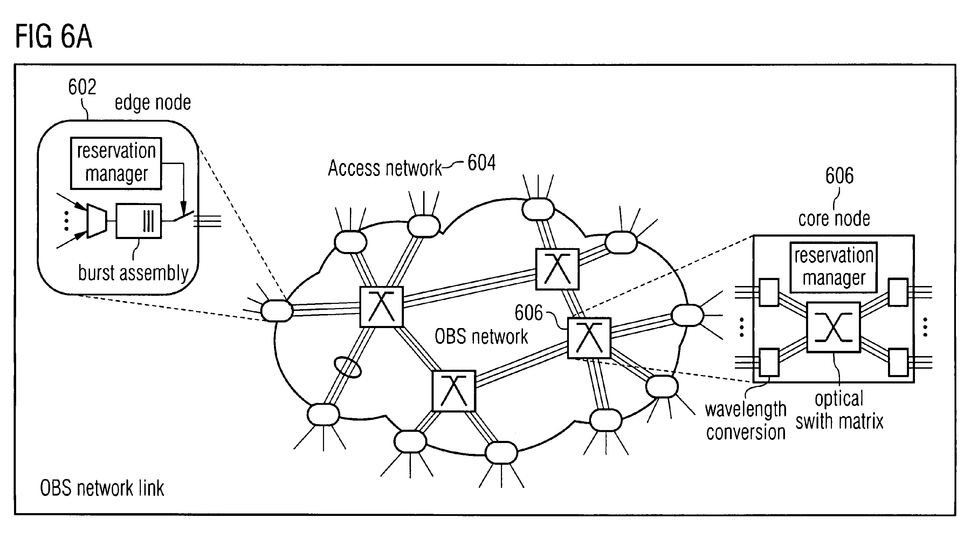

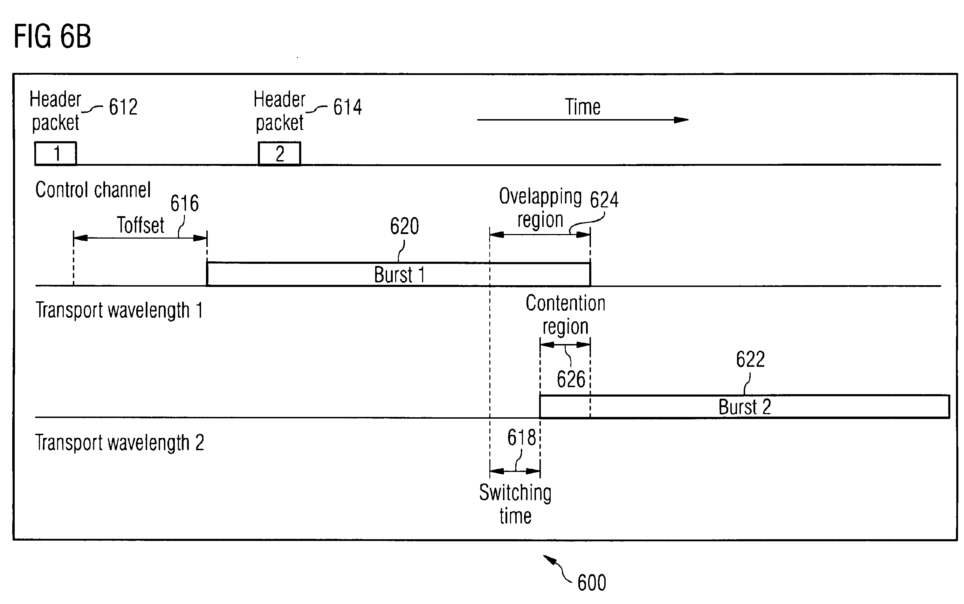

An exemplary apparatus 600 for transmitting such an optical data burst is shown in Figure 6a. There are two types of nodes shown here. The first are edge nodes 602 where traffic is collected from access networks 604 and assembled into larger data units, the so-called bursts. Core nodes 606 serve as transit nodes in the core network whose main task is switching the bursts without extensive processing. This is achieved according to present invention using the control information containing arrival times as will now be described with reference to the scheduling operation 608 of Figure 6b.

The JAT schema 610 will be described in reference to Figure 6b. A header packet 612(614) is generated by an edge node. When a header packet 612 (614) is processed at a core node (not shown), a timer (not shown) with the value *t*_{*offset*}*-t*_{*switch*} is started, where *t*_{*offset*} 616 is the value contained in the *offset time* field of the header packet and *t*_{*switch*} 618 is the switching time of the switching fabric used at the core node. When the timer is triggered the core node switches the corresponding ports according to the information contained in the header packet. In the exemplary case, this information is contained in the *label* and *wavelength ID.*

With the foregoing set up, it is ensured that when the burst 1 620 arrives at the core node everything is prepared for a clean all-optical routing through it. If the core node is sending another burst, e.g., burst 2 622, when the timer is triggered, only the tail of this burst is lost.

On the other hand, JET needs both information regarding the burst arrival and duration times. In JET it is necessary to store for each wavelength of each output fiber of each core node, complex state information regarding the bandwidth reservation status. In particular, the core node has to know for each wavelength of each fiber at every time which bandwidth gaps are eventually available for future burst transmission requests. This "bandwidth reservation map" has to be updated each time a new header packet arrives at the node accordingly to its new reservation request. Depending on whether the bandwidth gap requested by the new header packet is busy or available, the control plane decides whether or not to block its associated burst.

Consequently, JAT uses a much simpler method that requires with less information which allows simplifying the hardware and software of each core and edge node. This simplicity leads to cheaper OBS equipment. In particular, JAT needs neither to keep JET's "bandwidth reservation map" nor to check whether a new incoming burst fits or not in a free bandwidth gap. Indeed, in JAT it is only necessary to keep track of the arrival time of each burst. No checking for blocking is necessary since blocking naturally happens if the new burst arrives before the last burst has been completely sent. Consequently, in the basic functionality of JAT new bursts always win contention against older bursts. Of course, this would change if quality of service (QoS) is introduced.

Considering again Figure 6b, the reservation contention case of JAT will now be discussed. When comparing bursts 1 and 2 620, 622, since burst 2 622 arrives before burst 1 620 has finished, its transmission contention takes place in the overlapping region 624. According to the proposed JAT protocol, only the bits of burst 1 620 in the overlapping region 624 are lost. These lost bits are shown here at 626. In other words, with JAT at least some of the information of a block in contention is recoverable. By contrast, in JET (or JIT or Horizon, for that matter) the whole burst 2 622 is lost.

In this sense, JAT in terms of blocking probability reduction could be considered a burst segmentation approach with a tail dropping policy. According to Vokkarane, cited above, an advantage of dropping the tail segments of bursts rather than the head segments is that there is a better chance of in-sequence delivery of packets at the destination, assuming that dropped packets are retransmitted at a later time. A head-dropping policy will result in a greater likelihood that packets will arrive at their destination out of order. From the Vokkarane article, it can be surmised that the new JAT proposal works as well, or better, than burst segmentation implemented on top of JET. A more in depth discussion of the burst segmentation approach, also called optical composite burst switching (OCBS), is described in Neuts.

In conclusion, these and other studies show an important reduction in the blocking probability using OCBS. Given the complexity of OCBS, and further the complexity of adding OCBS on top of JET, it is clear that the much-simpler JAT protocol of the present invention is superior. The first implication of this is an important cost reduction for the whole OBS network. In particular, the control plane and the hardware of the edge and core nodes are simpler and faster.

Thus, the instant invention presents a concept for a new reservation protocol for OBS networks that performs better than the state-of-the-art protocols and yet is less complex and therefore cheaper to implement. The invention realizes a reservation protocol manipulating only the burst arrival information, i.e., not the burst size. This leads to a lower blocking probability. In addition, the invention also encompasses a new definition of the details of a new protocol.

## Claims

1. A method for transmitting an optical signal in an optical burst switching network having a data burst signal and a control signal representing the optical signal, **characterized in that**,
generating a header packet of the control signal having information indicating an arrival time of the data burst signal and no information regarding a burst size of the data burst signal, and
transmitting the control signal with the header packet generated through the optical burst switching network.

2. The method according to preceding claim 1, further **characterized in that**, receiving the header packet at a core node.

3. The method according to any of the preceding claims, further **characterized in that**, starting a timer that times the offset time for the data burst signal.

4. The method according to preceding claim 3, further **characterized in that**, the timer times a value *t*_{*offset*}*-t*_{*switch*}, where *t*_{*switch*} is the switching time of a core node and *t*_{*offset*} is the time when the optical data burst is expected.

5. The method according to any of the preceding claims, further **characterized in that**, switching, when the timer is triggered, the core node corresponding ports according to information contained in the header packet.

6. The method according to any of the preceding claims, further **characterized in that**, setting an *offset time* field in the header packet that contains a value of the offset time between header packet and burst.

7. The method according to any of the preceding claims, further **characterized in that**, resolving contention cases by asserting that new data bursts win contention against older data bursts.

8. The method according to any of the preceding claims, further **characterized in that**, resolving contention cases by truncating only bits of an earlier data burst in a region that overlaps a later data burst.

9. An apparatus for transmitting an optical signal in an optical burst switching network having a data burst signal and a control signal representing the optical signal, **characterized in that**,
a node of the optical burst switching network generating a header packet of the control signal having information indicating an arrival time of the data burst signal and no information regarding a burst size of the data burst signal, and
another node for receiving and switching the data burst signal according to the control signal of the header packet generated through the optical burst switching network.

10. The apparatus according to claim 9, wherein the node is an edge node.

11. The apparatus according to any of claims 9 and 10, wherein the another node is a core node.
